(19) Europäisches Patentamt
European Patent Office
Office européen des brevets

(11) Publication number: **0 243 997 B1**

(12) # EUROPEAN PATENT SPECIFICATION

(45) Date of publication of patent specification: **14.10.92**

(51) Int. Cl.[5]: **C08G 61/12**, C08G 67/00

(21) Application number: **87200609.3**

(22) Date of filing: **30.03.84**

(60) Publication number of the earlier application in accordance with Art.76 EPC: **0 124 276**

(54) **Preparation of poly (arylene ether ketones).**

(30) Priority: **31.03.83 US 481083**

(43) Date of publication of application:
**04.11.87 Bulletin 87/45**

(45) Publication of the grant of the patent:
**14.10.92 Bulletin 92/42**

(84) Designated Contracting States:
**AT BE CH DE FR IT LI LU NL SE**

(56) References cited:
**US-A- 3 065 205**
**US-A- 3 385 825**
**US-A- 3 516 966**
**US-A- 4 247 682**

(73) Proprietor: **RAYCHEM CORPORATION (a Delaware corporation)**
**300 Constitution Drive**
**Menlo Park, California 94025(US)**

(72) Inventor: **Jansons, Viktors**
**123 New York Avenue**
**Los Gatos California(US)**
Inventor: **Gors, Heinrich Carl**
**2508 Mardell Way**
**Mountain View California(US)**

(74) Representative: **Jay, Anthony William et al**
**Raychem Limited Intellectual Property Law**
**Department Faraday Road Dorcan**
**Swindon, Wilts SN3 5HH(GB)**

EP 0 243 997 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of preparing poly(arylene ketones) and in particular to an electrophilic polymerization process for preparing such polymers.

Poly(arylene ether ketones), in particular all para-linked poly(arylene ether ketones), possess many desirable properties, for example, high temperature stability, mechanical strength, and resistance towards common solvents. The preparation of poly(arylene ether ketones) by two different approaches has been described in the literature. The first approach is an electrophilic synthesis in which an aryl ketone linkage is formed. The second is a nucleophilic synthesis in which an aryl ether linkage is formed. This invention is directed to an improved electrophilic synthesis for preparing poly(arylene ether ketones), in particular para-linked poly(aryl ether ketones).

In such an electrophilic synthesis, the polymerization step involves the formation of an aryl ketone group from a carboxylic acid or acid derivative group and an aromatic compound containing an aromatic carbon bearing an activated hydrogen atom, i.e., a hydrogen atom displaceable under the electrophilic reaction conditions. The monomer system employed in the polymerization can be, for example, (a) a single aromatic compound containing both a carboxylic acid or acid derivative group as well as an activated hydrogen atom on an aromatic carbon for example, p-phenoxybenzoyl chloride; or (b) a two-component system of a dicarboxylic acid or acid derivative and an aromatic compound containing two activated hydrogen atoms, for example, 1,4-diphenoxybenzene and terephthaloyl chloride.

Electrophilic polymerization of this type is often referred to as Friedel-Crafts polymerization. Typically, such polymerizations are carried out in a reaction medium comprising the reactant(s), a catalyst, such as anhydrous aluminum trichloride, and solvent such as methylene chloride, carbon disulfide, nitromethane, nitrobenzene, or orthodichlorobenzene. Because the carbonyl groups of the reactant(s) and products complex with aluminum trichloride and thereby deactivate it, the aluminum trichloride catalyst is generally employed in an amount greater than one equivalent for each equivalent of carbonyl groups in the reaction medium. Other inorganic halides such as ferric chloride may be employed as the catalyst.

Such Friedel-Crafts polymerizations generally have produced an intractable reaction product difficult to remove from the reaction vessel and purify. Further, such processes have tended to produce polymer of undesirably low molecular weight and/or of poor thermal stability. The all para-linked poly(arylene ether ketones) have been particularly difficult to prepare under such Friedel-Crafts conditions. One factor that appears to contribute to the unsatisfactory results reported in the literature is that the para-linked polymers are more highly crystalline than the ortho, meta or mixed isomeric members of this polymer family and are therefore generally more insoluble in the reaction media typically used in such Friedel-Crafts reactions. This tends to result in the premature precipitation of the polymer in low molecular weight form. Another factor that may lead to these poor results is deactivation of the terminal aryloxy groups by complexation with aluminum chloride or alkylation of the terminal group which prevents further growth of the polymer chain. Also, side reactions, particularly at the ortho position of activated aromatic rings can result in a polymer that is branched and/or is more likely to cross-link at elevated temperatures such as those required for melt processing the polymer. It is generally recognized that in Friedel-Crafts reactions, ortho substitution of the polymer is more likely to occur if the reaction is conducted at elevated temperatures and/or for a relatively long reaction time. US-A-3,065,205 3,767,620, 3,516,966, 3,791,890, 4,008,203 and GB-A-971,227 and 1,086,021 disclose the preparation of poly(arylene ketones) by Friedel-Crafts polymerization and generally acknowledge some of the difficulties in producing tractable, melt-stable polymers. For example, US-A-3 791 890 provide a method of producing the polymers in granular form by special treatment of the reaction mixture before gellation can occur and US-A-3 767 620 provide a method of treating the polymer to reduce undesired end groups which result from side reactions during polymerization and which cause thermal instability of the polymer.

To overcome the disadvantages encountered in producing poly(arylene ketones) by the above described Friedel-Crafts polymerization, it has been proposed to use boron trifluoride catalyst in anhydrous hydrogen fluoride. as described for example, in US-A-3,441,538, 3,442,857, 3,953,400, and 3,956,240. This general process has been used commercially to produce polymer of the desired high molecular weight and thermal stability. However, the use of boron trifluoride and hydrogen fluoride requires special techniques and equipment making this process difficult to practice on a commercial scale.

We have now discovered an improved method for the production of poly(arylene ether ketones) by an electrophilic synthesis which results in high molecular weight, thermally stable polymers using reaction media that are readily handled on a commercial scale.

In the method of this invention, the Friedel-Crafts polymerization of appropriate monomer systems, as defined more fully hereinafter, is controlled to suppress side reactions including ortho substitution, alkylation

and chain branching and/or to solubilize or swell the polymer, by conducting the reaction under select reaction conditions and proportions of reactants. By this method, a thermally stable, linear poly(arylene ether ketone) substantially free of pendant groups resulting from ortho substitution of para-linked aromatic rings in the polymer backbone can be obtained.

The invention accordingly provides a method of producing a poly(arylene ether ketone) which comprises polymerizing a monomer system comprising:

I)

(i) phosgene or an aromatic diacid dihalide together with

(ii) a polynuclear aromatic comonomer comprising:

(a) H-Ar-O-Ar-H

(b) $H-(Ar-O)_n-Ar-H$

wherein n is 2 or 3

(c) $H-Ar-O-Ar-(CO-Ar-O-Ar)_m-H$

wherein m is 1, 2 or 3

or

(d) $H-(Ar-O)_n-Ar-CO-Ar-(O-Ar)_m-H$

wherein m is 1, 2 or 3,

and n is 2 or 3

or

II) an acid halide of the formula:

$$H-Ar-O-[(Ar-CO)_p-(Ar-O)_q-(Ar-CO)_r]_k-Ar-CO-Z$$

wherein Z is halogen, k is 0, 1 or 2, p is 1 or 2, q is 0, 1 or 2 and r is 0, 1 or 2;

or

III) an acid halide of the formula:

$$H-(Ar-O)_n-Ar-Y$$

wherein n is 2 or 3 and Y is CO-Z or CO-Ar-CO-Z

where Z is halogen;

wherein each Ar is independently selected from substituted or unsubstituted phenylene, and substituted and unsubstituted polynuclear aromatic moieties free of ketone carbonyl and ether oxygen groups;

in a reaction medium comprising

A) a Lewis acid in an amount of one equivalent per equivalent or carbonyl groups present plus an amount effective to act as a catalyst for the polymerisation;

B) without addition of a Lewis base; and

C) a non-protic diluent in an amount from 0 to 93% by weight, based on the weight of the total reaction mixture.

characterised in that

the amount of Lewis acid effective to act as a catalyst is 0.05 to 0.3 equivalents per equivalent of acid halide, the polymerisation is continued until the inherent viscosity of the poly(aryletherketone) produced is at least 0.6, and

i) when the monomer system includes a diacid dihalide and a comonomer as defined in I(ii) (a), I(ii) (b) or I(ii) (d):

(aa) the Lewis acid is present in excess of the minimum specified in (A) above by an amount of up to 0.4 equivalents per equivalent of undeactivated aryloxy groups in the monomers, and, if the acid halide groups are situated on separate non-fused aromatic rings, by an additional amount of up to 0.5 equivalents per equivalent of acid halide groups; and

(bb) the concentration of monomers in the reaction mixture is at least 7% by weight, based on the total weight of the reaction mixture; with the further proviso that when the monomer system includes a comonomer as defined in I(ii)(a) and the diacid dihalide is benzene dicarbonyl dichloride or diphenyl ether dicarbonyl dichloride, the polymer produced is at least partially crystalline; or

ii) when the monomer system is III, the Lewis acid is present in excess of the minimum specified in (A) above an amount of up to 0.8 equivalent per equivalent of undeactivated aryloxy groups in the monomers; or

iii) when the monomer system is I(ii)(c) or II, the Lewis acid is present in an amount in excess of the minimum specified in (A) above by at least 0.6 +[0.25 × tanh (50(0.1-D)] equivalents per equivalent of acid halide groups where D is the molar ratio of monomer to diluent.

The method of this invention provides a high reaction rate which enables the reaction to be carried out at relatively low temperatures over a relatively short period of time. Further, the polymer is maintained in the reaction medium, for example in solution or in a reactive gel state, until high molecular weight polymer is obtained. Further, the polymer produced is essentially linear with little, if any, ortho substitution process of this invention maintains the polymer in solution or in a more tractable state, recovery and purification of the polymer is greatly facilitated.

The polymers produced by the process of the invention have repeat units of the general formula

-Ar-O-Ar-CO-

wherein each Ar is independently selected from substituted and unsubstituted phenylene and substituted and unsubstituted polynuclear aromatic moieties. The term polynuclear aromatic moieties is used to mean aromatic moieties containing at least two aromatic rings. The rings can be fused, joined by a direct bond or by a linking group. In certain of the monomers, e.g. the polynuclear aromatic comonomers, the acid halide monomes and certain diacid dihalides, at least two of the aromatic rings are linked by an ether oxygen linkage. Other linking groups which can join aromatic rings in the aromatic moieties include, for example, carbonyl, sulfone, sulfide, amide, imide, azo, alkylene, perfluoroalkylene.

The phenylene and polynuclear aromatic moieties can contain substitutents on the aromatic rings. These substituents should not inhibit or otherwise interfere with the polymerization reaction to any significant extent. Such acceptable substituents include, for example, phenyl, halogen, nitro, cyano, alkyl, 2-aralkenyl, alkynyl.

These polymers are prepared in accordance with this invention by polymerising an appropriate monomer system from those defined above.

Aromatic diacid dihalide employed is preferably a dichloride or dibromide. Illustrative diacid dihalides which can be used include, for example

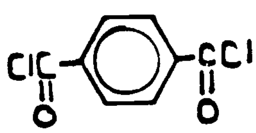
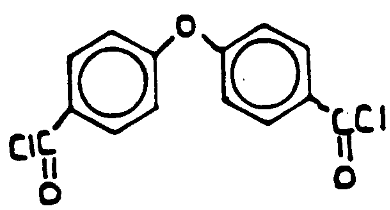
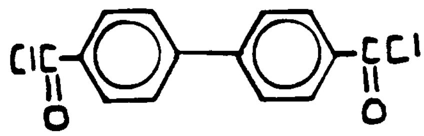

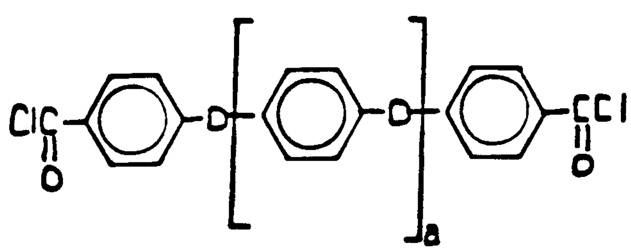
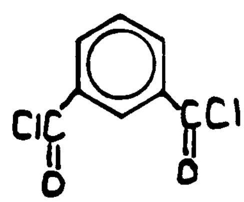

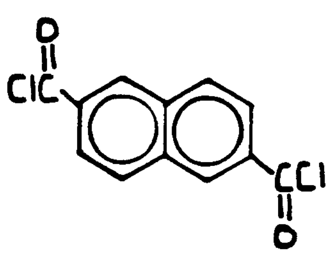
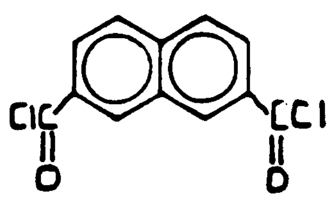
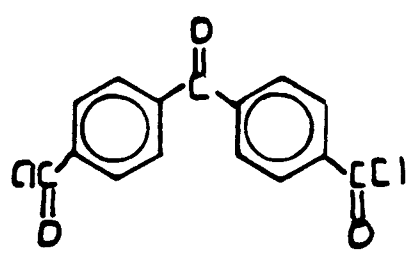

wherein a is 0-4.

Illustrated polynuclear aromatic comonomers which can be used with such diacid halides are:

(a) H-Ar-O-Ar-H, which includes, for example:

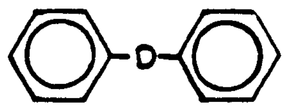

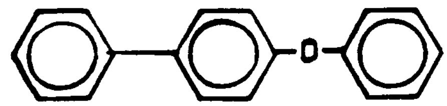

(b) H-$(Ar-O)_n$-Ar-H, which include, for example:

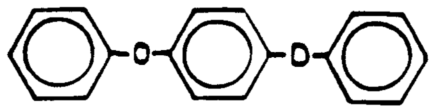

and

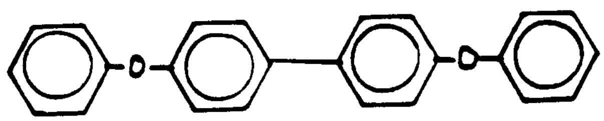

(c) H-Ar-O-Ar-$(CO-Ar-O-Ar)_m$-H, which includes, for example:

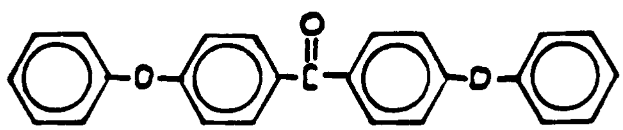

and

(d) H-$(Ar-O)_n$-Ar-CO-Ar-$(O-Ar)_m$-H which includes, for example:

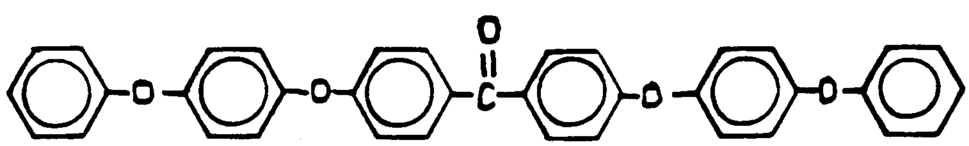

Monomer systems II and III comprise an acid halide. (The term acid halide is used herein to refer to a monoacid monohalide.) In monomer system II, the acid halide is of the formula

H-Ar-O-$[(Ar-CO)_p$-$(Ar-O)_{\overline{q}}(Ar-CO)_r]_k$-Ar-CO-Z

Such monomers include for example, where k = 0

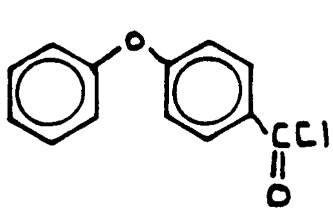

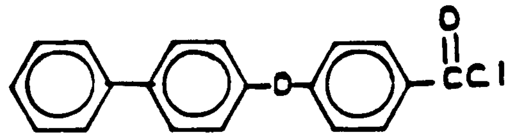

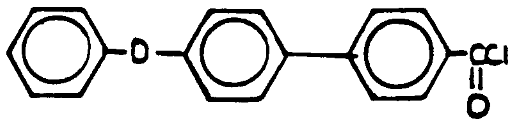

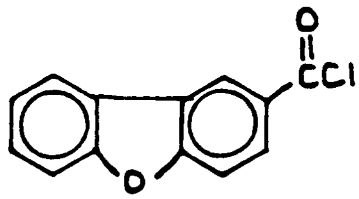

and where k = 1

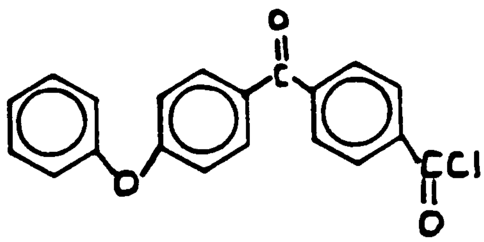

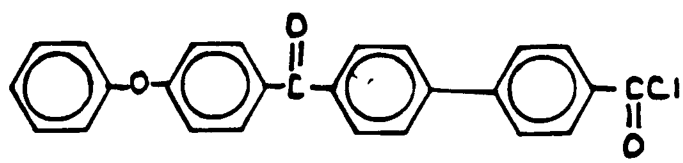

In monomer system III, the acid halide is of the formula

H-(Ar-O)$_n$-Ar-Y

Examples of such acid halides include

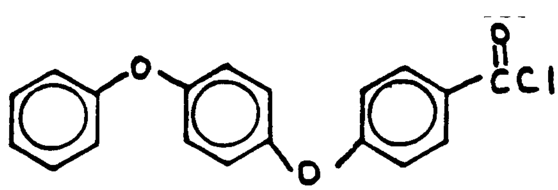

and

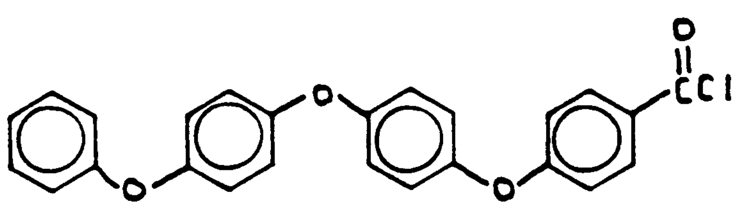

It is to be understood that combinations of monomers which fall within the same proviso clause, as set forth above, can be employed. For example, one or more diacid dihalides can be used with one or more polynuclear aromatic comonomers as long as the correct stoichiometry is maintained. Further, one or more acid halides can be included. In addition monomers which do not contain an ether linkage can be employed as long as one or more of the comonomers used contains at least one ether oxygen linkage. Such comonomers include for example:

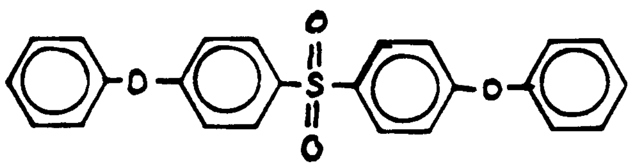

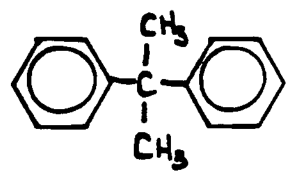

which can be used as the sole comonomer with an ether containing diacid dihalide or with phosgene or any diacid dihalide when used in addition to a polynuclear aromatic comonomer as defined in I(ii)(a), I(ii)(b), I(ii)-(c) or I(ii)(d). Similarly

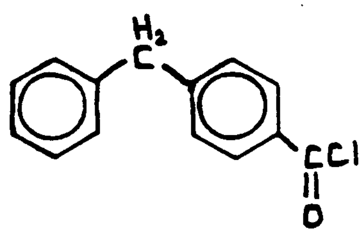

can be used as a comonomer together with an ether-containing polynuclear aromatic acid halide or as an additional comonomer together with a monomer system as defined in I.

The term "Lewis acid" is used herein to refer to a substance which can accept an unshared electron pair from another molecule. Lewis acids which can be used in the practice of this invention include, for example, aluminum trichloride, aluminum tribromide, antimony pentachloride antimony pentafluoride, indium trichloride, gallium trichloride, boron trichloride, boron trifluoride, zinc chloride, ferric chloride, stannic chloride, titanium tetrachloride, and molybdenum pentachloride. The use of substantially anhydrous aluminum trichloride as the Lewis acid is preferred.

The amount of Lewis acid used in the practice of this invention varies depending on the particular monomers and reaction medium selected. In all instances one equivalent of Lewis acid per equivalent of carbonyl groups present in the monomer system is used plus an amount effective to act as a catalyst for the polymerization (also referred to herein as a catalytic amount). The catalytic amount added is from 0.05 to 0.3 equivalents of Lewis acid per equivalent of acid halide in the reaction mixture. Additional amounts of Lewis acid are also required depending on the nature of the monomers and the reaction conditions in a manner as set forth below. Further, if a comonomer containing other basic species, such as sulfone groups, is used, additional Lewis acid may be required.

In this invention, suppression of side reactions results in a polymer that is thermally stable, that is it does not degrade or cross-link when subjected to elevated temperatures, e.g. temperatures above the melting point of the polymer, for a period of time. For a polymer of this type to be suitable for melt processing, it must be able to withstand the processing temperatures for the required processing time. Typically these conditions require that the polymer can withstand temperatures up to about 30 °C above the melting or softening point of the polymer for periods of at least 30 minutes, preferably at least 60 minutes and most preferably at least 90 minutes, without undesired gel formation or substantial change in inherent viscosity.

It is generally preferred to carry out the reaction at temperatures in the range of between about -30 °C and +25 °C (room temperature).

It is believed that the aromatic rings which are particularly susceptible to ortho substitution are active aryloxy groups. Such groups are referred to herein as undeactivated aryloxy groups. By "undeactivated aryloxy group" is meant an aryloxy group which is in a molecule in which there are no deactivating groups

or is located at least two aromatic moieties (i.e. Ar as defined above) away from a deactivating group such as a carbonyl. Conversely a "deactivated aryloxy group" is an aryloxy group separated from a deactivating group, usually carbonyl, by an aromatic group containing one aromatic ring, fused aromatic rings or aromatic rings linked by direct bonds.

A non-protic diluent can also be employed, if desired. It should also be relatively inert toward Friedel-Crafts reactions. The diluent is preferably somewhat polar as measured by its dielectric constant and solubility parameter. Preferably the dielectric constant of the diluent is at least about 2.5 at 24° C, and preferably in the range of from about 4.0 to about 25 at 24° C. The Hildebrand solubility parameter of the diluent is preferably at least about 7.2 $[cal/cm^3]^{1/2}$ and is preferably in the range of from about 9.2 to about 15 $[cal/cm^3]^{1/2}$. Preferred diluents include, for example, methylene chloride, carbon disulfide, o-dichlorobenzene, 1,2,4-trichlorobenzene, o-difluorobenzene, 1,2-dichloroethane, 1,1,2,2-tetrachloroethane and mixtures thereof.

The diluent is used in an amount from 0 to 93% by weight, based on the weight of the total reaction mixture. As is known in polymerizations of this type, the reactions can be run neat, that is without the presence of a diluent.

As discussed in more detail below, it has been found that the monomer to diluent molar ratio can contribute to control the polymerisation reaction to yield the desired product. Typically the diluent is used in an amount of at least 10%, preferably at least 20% by weight based on the weight of the reaction mixtures.

Use of an alkylating or acylating diluent can lead to undesired side reactions as mentioned above. When such solvents are employed control of the polymerization by techniques taught in this specification suppresses such alkylation or arylation. The result is a thermally stable, melt processable, essentially linear polymer.

The reaction conditions required depend on the reactivity of the monomers used. Two general classes of monomers need to be considered - those containing undeactivated aryloxy groups as defined above and those which do not. If any monomer in the monomer system contains an undeactivated aryloxy group, the amount of Lewis acid used generally should not exceed a certain amount.

Monomer systems which can be used in the practice of this invention have been defined above with consideration of the reactivity of the aryloxy groups present. The conditions under which the polymerization will be controlled to produce the desired product can then be set forth, with further requirements provided where the relative activity of the acid halide groups make this necessary.

Monomer systems that contain undeactivated aryloxy groups are I wherein the comonomer is as defined in I(ii)(a), I(ii)(b), I(ii)(d) and III. In general, when monomers of this type are used the amount of Lewis acid present in addition to the above noted one equivalent per equivalent of carbonyl groups present plus an amount effective to act as a catalyst for the polymerization, is up to 0.4 equivalents per equivalent of undeactivated aryloxy groups present. However, because of the reactivity of certain polynuclear diacid dihalides such as diphenyl ether dicarbonyl dichloride, it has been found desirable to employ a different amount of Lewis acid when such diacid dihalides are used in the monomer system. When such polynuclear diacid dihalides are used in monomer system I with a comonomer defined in I(ii)(a), I(ii)(b) and I(II)(d) it is often desirable to add further Lewis acid up to 0.5 equivalents per equivalent of acid halide groups. Preferably the further amount added is between 0.03 and 0.5 equivalents per equivalent of acid halide groups. We have found that meta-benzene dicarbonyl dichloride is sufficiently reactive and the product suffieciently soluble in the reaction medium that it is not necessary to limit the maximum excess of Lewis acid to obtain high molecular weight polymer. However, to prepare polymers which are at least partly crystalline from monomer systems including substantial amounts of less reactive para benzene dicarbonyl dichlorides, an amount of Lewis acid in excess of that defined in A) above of up to 0.4 equivalents per equivalent of undeactivated aryloxy groups in the monomers is used. Crystallinity of the polymers may be measured by standard techniques such as differential scanning calorimetry or X-ray diffraction.

It has also been found to be necessary when the monomer system used is I with the comonomer being that defined in I(ii)(a), I(ii)(b) or I(ii)(d) that the concentration of monomers in the reaction mixture be at least 7%, preferably at least 10%, and most preferably at least 15%, by weight based on the total weight of the reaction mixture.

When the monomer system employed is III, it is also desirable to conduct the reaction at similar monomer concentrations.

The second general class of monomers are monomer systems which contain no undeactivated aryloxy groups. Monomers of this type are set forth in monomer system I wherein the comonomer is as defined in I(ii)(c) and II. With this class of polymers it is preferred to use a large excess of Lewis acid, the excess depending on the particular monomer to diluent molar ratio (D). Generally, it is preferred to have a relatively high monomer to diluent ratio and a relatively large excess of Lewis acid. The amount of excess Lewis acid

(in addition to the above noted equivalent per equivalent of carbonyl groups plus a catalytic amount) is at least 0.6 + (0.25 × tanh [50(0.1-D)]) equivalents per equivalent of acid halide groups. The amount of excess Lewis acid is preferably at least 0.8 + (0.25 × tanh [50(0.1-D)]) and most preferably is at least 1.0 + (0.25 × tanh [50(0.1-D)]) equivalents per equivalent of acid halide groups. When the monomer to diluent molar ratio is greater than 0.15, the amount of Lewis acid in excess of the standard amount is at least 0.3 equivalents per equivalent of acid halide groups.

In general, it is preferred to add Lewis acid in a substantial excess of the minimum amounts specified. Generally, at least 0.5 equivalent and preferably at least 1.0 equivalents of additional Lewis acid, per equivalent of acid halide groups are used.

The reaction conditions found to be necessary to prepare melt-processable, high molecular weight, substantially linear poly(arylene ether ketones) are not taught or suggested by the prior art and in fact are contrary to the generally held beliefs of Friedel-Crafts chemistry. Conventionally, a moderate excess of Lewis acid usually about 0.4 equivalents per equivalent of carbonyl groups in the monomer system is used in Friedel-Crafts reactions. Applicant has found that when all aryloxy groups present in the monomer system are deactivated by carbonyl groups as defined above, a large excess of Lewis acid must be used. This is illustrated in Figure 1, by a graph showing the relationship between the amount of Lewis acid used and the molecular weight of the polymer as measured by inherent viscosity as described below. Prior art Friedel-Crafts polymerization reactions of this type were conducted using a Lewis acid to monomer ratio well below that needed for the production of polymer having the desired inherent viscosity or used monomer to diluent molar ratios below that required. This is illustrated in Figure 1, where it is shown that at least 2 equivalents of aluminum chloride per equivalent of monomer are required when preparing poly(carbonyl-p-phenylene-oxy-p-phenylene). Prior art processes used aluminum chloride to monomer ratio shown to produce polymer of lower inherent viscosity, as shown on the graph, or where there are undeactivated aryloxy groups present in the monomer system, it has been found to be necessary to add a smaller excess of Lewis acid than taught in the prior art but to maintain a relatively high monomer concentration in the reaction mixture. As mentioned above, this results in suppression of side reactions, particularly in the ortho position of para-linked aromatic rings in the polymer chain. Traditional Friedel-Crafts chemistry suggests the use of a moderate excess of Lewis acid and a more dilute reaction mixture to achieve these results. Applicants have found the opposite to be necessary in the preparation of poly(arylene ether ketones).

As mentioned above, one of the important features of this invention is that poly(arylene ketones) of high molecular weight can be obtained. By "high molecular weight" is meant polymer having an inherent viscosity greater than 0.6. Preferably the polymer prepared by the process of this invention has an inherent viscosity in the range of 0.6 to 2.0. Polymers having an inherent viscosity below 0.6 are generally not useful because they have poor mechanical properties, such as tensile strength and elongation. They also tend to be brittle while polymers having an inherent viscosity above 2.0 are very difficult to melt process. Throughout this application, inherent viscosity refers to the mean inherent viscosity determined according to the method of Sorenson et al, "Preparative Methods of Polymer Chemistry" Interscience (1968), at page 44 [0.1g polymer dissolved in 100 ml of concentrated sulfuric acid at 25° C].

If desired, the molecular weight of the polymer, the degree of branching and amount of gelation can be controlled by the use of, for example, capping agents as described in the US-A-4,247,682.

The molecular weight of the polymer can also be controlled by a polymerization reaction utilizing a two-monomer system as described above, by employing a slight excess of one of the monomers.

Capping agents, when employed, are added to the polymerization reaction medium to cap the polymer on at least one end of the polymer chain. This terminates continued growth of that chain and controls the resulting molecular weight of the polymer, as shown by the inherent viscosity of the polymer. Judicious use of the capping agents results in a polymer within a selected narrow molecular weight range, decreased gel formation during polymerization, and decreased branching of the polymer chains and increases melt stability. Both nucleophilic and electrophilic capping agents are used to cap the polymer at each end of the chain.

Preferred nucleophlic capping agents are 4-chlorobiphenyl, 4-phenoxybenzophenone, 4-(4-phenoxyphenoxy)benzophenone, biphenyl 4-benzenesulfonylphenyl phenyl ether, and the like.

Typical electrophilic capping agents are compounds of the formula

Ar″-CO-E or Ar″-$SO_2$-E

wherein Ar″ is phenyl, 3-chlorophenyl, 4-chlorophenyl, 4-cyanophenyl, 4-methylphenyl or an aromatic group substituted with an electron withdrawing substituent and E is halogen or other leaving group. Preferred electrophilic capping agents include benzoyl chloride, benzenesulfonyl chloride.

As mentioned above, Lewis acid is present in the reaction medium as the catalyst for the Friedel-Crafts polymerization reaction. The resulting polymer contains Lewis acid complexed to the carbonyl groups of the polymer. For many polymerizations, the Lewis acid is complexed to substantially all the carbonyl groups in the polymer. As is well known with polymers of this type, the catalyst residue must be removed, i.e. the Lewis acid must be decomplexed from the polymer and removed. A method for removing the catalyst residue is described in US-A-4,237,884.

Decomplexation can be accomplished by treating the polymerization reaction mixture with a decomplexing base after completion of polymerization. The base can be added to the reaction medium or the reaction medium can be added to the base. The decomplexing base must be at least as basic towards the Lewis acid as the basic groups on the polymer chain. Such decomplexation should be effected before isolation of the polymer from the reaction mixture.

The amount of decomplexing base used should be in excess of the total amount of bound (complexed) and unbound Lewis acid present in the reaction mixture and is preferably twice the total amount of Lewis acid. Typical decomplexing bases which can be used include water, dilute aqueous hydrochloric acid, methanol, ethanol, acetone, N,N-dimethylformamide, N,N-dimethylacetamide, pyridine, dimethyl ether, diethyl ether, tetrahydrofuran, trimethylamine, trimethylamine hydrochloride, dimethyl sulfide, tetramethylenesulfone, benzophenone, tetramethylammonium chloride, isopropanol and the like. The decomplexed polymer can then be removed by conventional techniques such as adding a nonsolvent for the polymer which is a solvent for or miscible with the Lewis acid/Lewis base complex and the Lewis acid; spraying the reaction medium into a non-solvent for the polymer; separating the polymer by filtration; or evaporating the volatiles from the reaction medium and then washing with an appropriate solvent to remove any remaining base/catalyst complex and diluent from the polymer.

Specific examples of the invention will now be described.

Example 1

A stock solution was prepared from p-phenoxybenzophenone (0.45 mol %), dichloroethane (63.6 g), and p-phenoxybenzoyl chloride (116.2 g, 0.400 mole) and stored at room temperature in a flask stoppered with an-air/no-air septum. This stock solution was sufficient for about twenty polymerizations of the scale below.

A reactor consisting of 200 ml resin kettle and a top with four openings to which were attached a mechanical stirrer with a PTFE paddle, a 50 ml addition funnel, a glass-clad thermocouple probe and an inert gas supply tube was assembled. (Glass equipment was dried at 100 ° C until just prior to use.) All ground glass joints were sealed with PTFE seals, except for the stirrer shaft which was sealed with vacuum grease. The assembled reactor was dried with a hot air gun or Bunsen burner while being flushed with nitrogen or argon. The inert gas atmosphere was maintained throughout the operations except for momentary interruptions for the addition of reagents.

The reactor was charged with, in order, anhydrous aluminium chloride (see Table following) and 1,2-dichloroethane (10.0 g). The white slurry was cooled to between -15 and -25 ° C with a dry ice/acetone bath.

Monomer stock solution (9.04 g) was added dropwise over a 7 minute period with continued stirring and cooling. After the completion of this addition, the reaction mixture's temperature was maintained at -15 ° C for one hour and then raised to 0 ° C and maintained there for 23 hours. Approximately 2-3 hours after addition of the monomers, a notable increase in viscosity occurred. At this point stirring became extremely difficult and was usually discontinued.

The polymer was isolated by the following workup procedure:
The reaction mixture was transferred into a 500 ml Waring blender containing 2% aqueous hydrochloric acid (200 ml) at room temperature. The blender was turned on and the dark orange gel transformed into white, decomplexed polymer. The polymer was collected by filtration, washed with 2% aqueous hydrochloric acid (200 ml) and digested successively in methanol (200 ml, overnight, 40 ° C) and in hot 2% aqueous hydrochloric acid (2 X 200 ml, 1 hour each). Alter filtration, the polymer was washed with deionized water (500 ml) and dried overnight at 165 ° C in a vacuum oven.

Alter workup, a white, fluffy polymer was obtained, and the table below illustrates the effect of the amount of aluminium chloride on the inherent viscosity of the polymer.

Table I

| Molar Ration of Aluminium Chloride to Monomer | Polymer Inherent Viscosity |
|---|---|
| 1.20 | 0.50 |
| 1.50 | 0.98 |
| 1.80 | 1.13 |
| 2.00 | 1.17 |
| 3.00 | 1.15 |

Example 2

This example demonstrates the necessity for controlling the excess of aluminium chloride where the monomers used are terephthaloyl chloride and a comonomer as defined in I(ii) (a), I(ii) (b), or I(ii) (d). For the purposes of this example, "per cent loading" is defined as 100 times the ratio of the theoretical yield (in grams) of polymer to the sum (in grams) of monomer, capping agent, Lewis acid and solvent in the reaction mixture.

Terephthaloyl chloride was polymerized with 1,4-diphenoxybenzene by the procedure of Example 1, with these exceptions: (1) no capping agents were employed, (2) the "per cent loading," as defined hereinbefore, was about 12% (Example 1 calculates to about 16%), and (3) the equivalent % excess of aluminium chloride was either 10 or 100, relative to the total equivalents of acid chloride groups present.

The polymer was isolated by the following workup procedure. The reaction mixture was transferred into a 500 ml Waring blender containing DMF (100-200 ml) chilled to -40 °C. The blender was turned on and the dark orange gel transformed into a white, decomplexed polymer. The polymer was collected by filtration, washed with DMF (100 ml), digested in DMF (100 ml, 50 °C, overnight), filtered, and digested in water (2 X 150 ml, 60 °C 1 hour each). Alter filtration, the polymer was dried overnight at 165 °C in a vacuum oven.

The reaction with only 10 equivalent % excess aluminium chloride gave polymer with inherent viscosity 1.59. The reaction with 100 equivalent % excess aluminium chloride gave polymer with inherent viscosity 0.18.

**Claims**

**1.** A method of producing a poly(arylene ether ketone) which comprises polymerising a monomer system comprising:

I)

(i) phosgene or an aromatic diacid dihalide together with

(ii) a polynuclear aromatic comonomer comprising:

(a) H-Ar-O-Ar-H

(b) $H-(Ar-O)_n-Ar-H$

wherein n is 2 or 3

(c) $H-Ar-O-Ar-(CO-Ar-O-Ar)_m-H$

wherein m is 1, 2 or 3

or

(d) $H-(Ar-O)_n-Ar-CO-Ar-(O-Ar)_m-H$

wherein m is 1, 2 or 3,

and n is 2 or 3 or

II) an acid halide of the formula:

$$H-Ar-O-[(Ar-CO)_p-(Ar-O)_q-(Ar-CO)_r]_k-Ar-CO-Z$$

wherein Z is halogen, k is 0, 1 or 2, p is 1 or 2, q is 0, 1 or 2 and r is O, 1 or 2;

or

III) an acid halide of the formula:

$$H-(Ar-O)_n-Ar-Y$$

wherein n is 2 or 3 and Y is CO-Z or CO-Ar-CO-Z

where z is a halogen;
wherein each Ar is independently selected from substituted or unsubstituted phenylene, and substituted and unsubstituted polynuclear aromatic moieties free of ketone carbonyl and ether oxygen groups;
in a reaction medium comprising
A) a Lewis acid in an amount of one equivalent per equivalent of carbonyl groups present plus an amount effective to act as a catalyst for the polymerization;
B) without addition of a Lewis base; and
C) a non-protic diluent in an amount from 0 to 93% by weight, based on the weight of the total reaction mixture,
characterised in that:
the amount of Lewis acid effective to act as a catalyst is 0.05 to 0.3 equivalents per equivalent of acid halide, the polymerization is continued until the inherent viscosity of the poly(aryletherketone) produced is at least 0.6, and
i) when the monomer system includes a diacid dihalide and a comonomer as defined in I(ii) (a), I(ii) (b) or I(ii) (d):
(aa) the Lewis acid is present in excess of the minimum specified in A) above by an amount of up to 0.4 equivalents per equivalent of undeactivated aryloxy groups in the monomers, and, if the acid halide groups are situated on separate non-fused aromatic rings, by an additional amount of up to 0.5 equivalents per equivalent of acid halide groups; and
(bb) the concentration of monomers in the reaction mixture is at least 7% by weight, based on the total weight of the reaction mixture; with the further proviso that when the monomer system includes a comonomer as defined in I(ii) (a) and the diacid dihalide is benzene dicarbonyl dichloride or diphenyl ether dicarbonyl dichloride, the polymer produced is at least partially crystalline; or
ii) when the monomer system is III, the Lewis acid is present in excess of the minimum specified in (A) above by an amount of up to 0.8 equivalent per equivalent of undeactivated aryloxy groups in the monomers;
iii) when the monomer system is either I(i) and I(ii)(c) or II, the Lewis acid is present in an amount in excess of the minimum specified in (A) above by at least 0.6 +[0.25 x tanh (50(0.1-D))] equivalents per equivalent of acid halide groups where D is the molar ratio of monomer to diluent.

**2.** A method in accordance with Claim 1 wherein said monomer system comprises p-phenoxybenzoyl chloride.

**3.** A method in accordance with Claim 1 wherein said monomer system comprises 1,4-diphenoxybenzene and terephthaloyl chloride.

**4.** A method in accordance with Claim 1 wherein said monomer system comprises 4,4'-diphenoxybenzophenone and phosgene or terephthaloyl chloride.

**5.** A method in accordance with Claim 1 wherein said monomer system comprises diphenyl ether and phosgene.

**6.** A method in accordance with Claim 1 wherein said monomer system comprises 1,4-diphenoxybenzene and phosgene.

**7.** A method in accordance with Claim 1 wherein the monomer system comprises I(i) and I(ii)(a), and the monomer I(i) is terephthaloyl or isophthaloyl chloride or mixtures thereof, and the monomer I(ii)(a) is diphenyl ether.

**8.** A method in accordance with Claim 1 wherein the monomer system comprises I(i) and I(ii)(b) and the monomer I(i) is terephthaloyl chloride and the monomer I(ii)(b) is bisphenoxybenzene.

**9.** A method in accordance with Claim 1 wherein the monomer system comprises I(i) and I(ii)(d) and the monomer I(i) is phosgene and the monomer I(ii)(d) is bis(phenoxyphenoxy)benzophenone.

**10.** A method in accordance with any of Claims 7 to 9 wherein the concentration of the monomers in the reaction medium is at least 10% by weight, preferably at least 15% by weight, based on the total weight of the reaction mixture.

**11.** A method in accordance with Claim 1 wherein the monomer system comprises I(i) and I(ii)(c) and the monomer I(i) is terephthaloyl chloride and the monomer I(ii)(c) is bisphenoxybenzophenone.

**12.** A method in accordance with Claim 1 wherein the monomer system comprises (II) p-phenoxybenzoyl chloride.

**13.** A method in accordance with Claim 1 wherein the monomer system comprises (III) p-phenoxy-p-phenoxybenzoyl chloride.

**14.** A method in accordance with any of the preceding claims, wherein said Lewis acid is selected from the group consisting of aluminium trichloride, boron trichloride, aluminium tribromide, titanium tetrachloride, antimony pentachloride, ferric chloride, gallium trichloride, and molybdenum pentachloride.

**15.** A method in accordance with Claim 7 wherein said polymerization is carried out in the presence of a non-protic diluent having a dielectric constant of at least 2.5 at 24 ° C, preferably in the range of from 4.0 to 25 at 24 ° C.

**16.** A method in accordance with Claim 15 wherein said diluent is selected from the group consisting of methylene chloride, carbon disulfide, o-dichlorobenzene, 1,2,4-trichlorobenzene, o-difluorobenzene, 1,2-dichloroethane, 1,1,2,2-tetrachloroethane and mixtures thereof.

**17.** A method in accordance with any of the preceding claims, wherein a capping agent is added to the reaction medium.

**18.** A method in accordance with claim 17 wherein both a nucleophilic and an electrophilic capping agent are added to the reaction medium.

**19.** A method in accordance with Claim 18 wherein said nucleophilic capping agent is selected from the group consisting of 4-chlorobiphenyl, 4-phenoxybenzophenone, biphenyl, 4-(4-phenoxyphenoxy)-benzophenone and 4-benzenesulfonylphenyl phenyl ether.

**20.** A method in accordance with Claim 18 or 19 wherein said electrophilic capping agent is selected from the group consisting of benzoyl chloride and benzenesulfonyl chloride.

**21.** A method in accordance with any of the preceding claims wherein the polymerisation is conducted at a temperature in the range of -30 ° C to + 25 ° C.

**Patentansprüche**

**1.** Verfahren zur Herstellung eines Poly(arylenetherketons), das aufweist: Polymerisieren eines Monomersystems, das folgendes aufweist:

I)

(i) Phosgen oder ein aromatisches zweisäuriges Dihalogenid zusammen mit

(ii) einem polynuklearen aromatischen Comonomer, das folgendes aufweist:

(a) H-Ar-O-Ar-H

(b) H-(Ar-O)$_n$-Ar-H,

wobei n = 2 oder 3,

(c) H-Ar-O-Ar-(CO-Ar-O-Ar)$_m$-H,

wobei m = 1, 2 oder 3,

oder

(d) H-(Ar-O)$_n$-Ar-CO-Ar-(O-Ar)$_m$-H,

wobei m = 1, 2 oder 3

und n = 2 oder 3, oder

II) ein Säure-Halogenid der Formel:

H-Ar-O-[$(Ar-CO)_p$-$(Ar-O)_q$-$(Ar-CO)_r]_k$-Ar-CO-Z,

wobei Z = Halogen, k = 0, 1 oder 2, p = 1 oder 2, q = 0, 1 oder 2 und r = 0, 1 oder 2; oder

III) ein Säure-Halogenid der Formel:

H-$(Ar-O)_n$-Ar-Y,

wobei n = 2 oder 3 und Y = CO-Z oder CO-Ar-CO-Z, wobei Z = ein Halogen;

wobei jedes Ar unabhängig ausgewählt ist aus substituiertem oder unsubstituiertem Phenylen und substituierten und unsubstituierten polynuklearen aromatischen Anteilen, die frei von Keton-Carbonyl- und Ether-Sauerstoff-Gruppen sind;

in einem Reaktionsmedium, das folgendes aufweist:

A) eine Lewis-Säure in einer Menge von einem Äquivalent pro Äquivalent von anwesenden Carbonylgruppen plus einer Menge, die wirksam ist, um als ein Katalysator für die Polymerisation zu wirken;

B) ohne Zusatz einer Lewis-Base; und

C) ein nichtprotisches Verdünnungsmittel in einer Menge von 0 bis 93 Gew.-%, bezogen auf das Gewicht des gesamten Reaktionsgemischs,

dadurch gekennzeichnet, daß:

die Menge von Lewis-Säure, die wirksam ist, um als ein Kataysator zu wirken, 0,05 bis 0,3 Äquivalente pro Äquivalent von Säure-Halogenid ist, die Polymerisation fortgesetzt wird, bis die inhärente Viskosität des hergestellten Poly(aryletherketons) wenigstens 0,6 ist und

i) wenn das Monomersystem ein zweisäuriges Dihalogenid und ein Comonomer gemäß der Definition in I(ii)(a), I(ii)(b) oder I(ii)(d) aufweist:

(aa) die Lewis-Säure in einem Überschuß des oben in (A) spezifierten Minimums um einen Betrag von bis zu 0,4 Äquivalenten pro Äquivalent von nicht-desaktivierten Aryloxygruppen in den Monomeren anwesend ist und, wenn die Säure-Halogenidgruppen an getrennten nichtkondensierten aromatischen Ringen liegen, um einen zusätzlichen Betrag von bis zu 0,5 Äquivalenten pro Äquivalent von Säure-Halogenidgruppen; und

(bb) die Konzentration von Monomeren in dem Reaktionsgemisch wenigstens 7 Gew.-%, bezogen auf das Gesamtgewicht des Reaktionsgemischs, ist; mit der weiteren Maßgabe, daß, wenn das Monomersystem ein Comonomer gemäß der Definition in I(ii)(a) aufweist und das zweisäurige Dihalogenid Benzoldicarbonyldichlorid oder Diphenyletherdicarbonyldichlorid ist, das erzeugte Polymer wenigstens teilweise kristallin ist; oder

ii) wenn das Monomersystem III ist, die Lewis-Säure in einem Überschuß des oben in (A) spezifizierten Minimums um einen Betrag von bis zu 0,8 Äquivalenten pro Äquivalent von nicht-desaktivierten Aryloxygruppen in den Monomeren anwesend ist;

iii) wenn das Monomersystem entweder I(i) und I(ii)(c) oder II ist, die Lewis-Säure in einer Überschußmenge des oben in (A) spezifizierten Minimums um wenigstens 0,6 + [0,25 x tanh (50-(0,1-D))] Äquivalenten pro Äquivalent von Säure-Halogenidgruppen anwesend ist, wobei D das Molverhältnis von Monomer zu Verdünnungsmittel ist.

**2.** Verfahren nach Anspruch 1, wobei das Monomersystem p-Phenoxybenzoylchlorid aufweist.

**3.** Verfahren nach Anspruch 1, wobei das Monomersystem 1,4-Diphenoxybenzol und Terephthaloylchlorid aufweist.

**4.** Verfahren nach Anspruch 1, wobei das Monomersystem 4,4'-Diphenoxybenzophenon und Phosgen oder Terephthaloylchlorid aufweist.

**5.** Verfahren nach Anspruch 1, wobei das Monomersystem Diphenylether und Phosgen aufweist.

**6.** Verfahren nach Anspruch 1, wobei das Monomersystem 1,4-Diphenoxybenzol und Phosgen aufweist.

**7.** Verfahren nach Anspruch 1, wobei das Monomersystem I(i) und I(ii)(a) aufweist und das Monomer I(i) Terephthaloyl- oder Isophthaloylchlorid oder Gemische davon und das Monomer I(ii)(a) Diphenylether

ist.

**8.** Verfahren nach Anspruch 1, wobei das Monomersystem I(i) und I(ii)(b) aufweist und das Monomer I(i) Terephthaloylchlorid und das Monomer I(ii)(b) Bisphenoxybenzol ist.

**9.** Verfahren nach Anspruch 1, wobei das Monomersystem I(i) und I(ii)(d) aufweist und das Monomer I(i) Phosgen und das Monomer I(ii)(d) Bis(phenoxyphenoxy)benzophenon ist.

**10.** Verfahren nach einem der Ansprüche 7 bis 9, wobei die Konzentration der Monomere in dem Reaktionsmedium wenigstens 10 Gew.-%, bevorzugt wenigstens 15 Gew.-%, bezogen auf das Gesamtgewicht des Reaktionsgemischs, ist.

**11.** Verfahren nach Anspruch 1, wobei das Monomersystem I(i) und I(ii)(c) aufweist und das Monomer I(i) Terephthaloylchlorid und das Monomer I(ii)(c) Bisphenoxybenzophenon ist.

**12.** Verfahren nach Anspruch 1, wobei das Monomersystem (II) p-Phenoxybenzoylchlorid aufweist.

**13.** Verfahren nach Anspruch 1, wobei das Monomersystem (III) p-Phenoxy-p-phenoxybenzoylchlorid aufweist.

**14.** Verfahren nach einem der vorhergehenden Ansprüche, wobei die Lewis-Säure aus der Gruppe ausgewählt ist, die aus Aluminiumtrichlorid, Bortrichlorid, Aluminiumtribromid, Titantetrachlorid, Antimonpentachlorid, Eisen(III)-chlorid, Galliumtrichlorid und Molybdänpentachlorid besteht.

**15.** Verfahren nach Anspruch 7, wobei die Polymerisation in Gegenwart eines nichtprotischen Verdünnungsmittels durchgeführt wird, das eine Dielektrizitätskonstante von wenigstens 2,5 bei 24 °C, bevorzugt in dem Bereich von 4,0 bis 25 bei 24 °C, hat.

**16.** Verfahren nach Anspruch 15, wobei das Verdünnungsmittel aus der Gruppe ausgewählt ist, die aus Methylenchlorid, Schwefelkohlenstoff, o-Dichlorbenzol, 1,2,4-Trichlorbenzol, o-Difluorbenzol, 1,2-Dichlorethan, 1,1,2,2,-Tetrachlorethan und Gemischen davon besteht.

**17.** Verfahren nach einem der vorhergehenden Ansprüche, wobei dem Reaktionsmedium ein Verkappungsmittel zugesetzt wird.

**18.** Verfahren nach Anspruch 17, wobei dem Reaktionsmedium sowohl ein nucleophiles als auch ein elektrophiles Verkappungsmittel zugesetzt werden.

**19.** Verfahren nach Anspruch 18, wobei das nucleophile Verkappungsmittel aus der Gruppe ausgewählt ist, die aus 4-Chlorbiphenyl, 4-Phenoxybenzophenon, Biphenyl, 4-(4-Phenoxyphenoxy)benzophenon und 4-Benzolsulfonylphenylphenylether besteht.

**20.** Verfahren nach Anspruch 18 oder 19, wobei das elektrophile Verkappungsmittel aus der Gruppe ausgewählt ist, die aus Benzoylchlorid und Benzolsulfonylchlorid besteht.

**21.** Verfahren nach einem der vorhergehenden Ansprüche, wobei die Polymerisation bei einer Temperatur in dem Bereich von -30 °C bis +25 °C durchgeführt wird.

**Revendications**

**1.** Procédé de production d'une poly(arylèneéther-cétone), qui consiste à polymériser un système de monomères comprenant :

I)

(i) du phosgène ou un dihalogénure de diacide aromatique conjointement avec

(ii) un comonomère aromatique polynucléaire comprenant :

(a) H-Ar-O-Ar-H

(b) $H-(Ar-O)_n-Ar-H$

où <u>n</u> a la valeur 2 ou 3

(c) H-Ar-O-Ar-(CO-Ar-O-Ar)$_m$-H
où m a la valeur 1, 2 ou 3
ou bien
(d) H-(Ar-O)$_n$-Ar-CO-Ar-(O-Ar)$_m$-H
où m a la valeur 1, 2 ou 3 et n a la valeur 2 ou 3 ; ou bien

II) un halogénure d'acide de formule :

H-Ar-O-[(Ar-CO)$_p$-(Ar-O)$_q$-(Ar-CO)$_r$]$_k$-Ar-CO-Z

dans laquelle Z est un halogène, k a la valeur 0, 1 ou 2, p a la valeur 1 ou 2, q a la valeur 0, 1 ou 2 et r a la valeur 0, 1 ou 2 ;
ou bien

III) un halogénure d'acide de formule :

H-(Ar-O)$_n$-Ar-Y

dans laquelle n a la valeur 2 ou 3 et Y représente CO-Z ou CO-Ar-CO-Z, où Z est un halogène ;
chaque Ar étant choisi indépendamment entre un groupement phénylène substitué ou non substitué et des groupements aromatiques polynucléaires substitués et non substitués dépourvus de groupes carbonyle de cétone et oxygène d'éther ;

dans un milieu de réaction comprenant

A) un acide de Lewis en une quantité d'un équivalent par équivalent de groupes carbonyle présents plus une quantité efficace pour agir comme catalyseur de polymérisation ;
B) sans addition de base de Lewis ; et
C) un diluant non protique en une quantité de 0 à 93 % en poids sur la base du poids du mélange réactionnel total,

caractérisé en ce que

la quantité d'acide de Lewis efficace pour agir comme catalyseur est de 0,05 à 0,3 équivalent par équivalent d'halogénure d'acide, la polymérisation est poursuivie jusqu'à ce que la viscosité inhérente de la poly(aryl-éther-cétone) produite soit au moins égale à 0,6, et

i) lorsque le système de monomères comprend un dihalogénure de diacide et un comonomère tel que défini en I(ii) (a), I(ii) (b) ou I(ii) (d) :

(aa) l'acide de Lewis est présent en excès, par rapport au minimum spécifié en A) ci-dessus, d'une quantité allant jusqu'à 0,4 équivalent par équivalent de groupes aryloxy non désactivés dans les monomères et, si les groupes halogénure d'acide sont situés sur des noyaux aromatiques séparés non condensés, d'une quantité additionnelle allant jusqu'à 0,5 équivalent par équivalent de groupes halogénure d'acide ; et
(bb) la concentration des monomères dans le mélange réactionnel est d'au moins 7 % en poids, sur la base du poids total du mélange réactionnel ; sous réserve en outre que lorsque le système de monomères renferme un comonomère tel que défini en I(ii)(a) et que le dihalogénure de diacide est le dichlorure de benzènedicarbonyle ou le dichlorure de diphénylétherdicarbonyle, le polymère produit soit au moins partiellement cristallin ; ou bien

ii) lorsque le système de monomères est le système III, l'acide de Lewis est présent en excès, par rapport au minimum spécifié en (A) ci-dessus, d'une quantité allant jusqu'à 0,8 équivalent par équivalent de groupes aryloxy non désactivés dans les monomères ;
iii) lorsque le système de monomères est le système I(i) et I(ii)(c) ou II, l'acide de Lewis est présent en une quantité en excès du minimum spécifié en A) ci-dessus d'une quantité d'au moins 0,6 + [0,25 x tanh (50(0,1-D))] équivalents par équivalent de groupes halogénure d'acide, où D est le rapport molaire du monomère au diluant.

2. Procédé suivant la revendication 1, dans lequel le système de monomères comprend du chlorure de p-phénoxybenzoyle.

3. Procédé suivant la revendication 1, dans lequel le système de monomères comprend du 1,4-diphénoxybenzène et du chlorure de téréphtaloyle.

4. Procédé suivant la revendication 1, dans lequel le système de monomères comprend de la 4,4'-diphénoxybenzophénone et du phosgène ou du chlorure de téréphtaloyle.

5. Procédé suivant la revendication 1, dans lequel le système de monomères comprend de l'éther de diphényle et du phosgène.

6. Procédé suivant la revendication 1, dans lequel le système de monomères comprend du 1,4-diphénoxybenzène et du phosgène.

7. Procédé suivant la revendication 1, dans lequel le système de monomères comprend les systèmes I(i) et I(ii)(a), et le monomère I(i) est le chlorure de téréphtaloyle ou le chlorure d'isophtaloyle ou des mélanges de ces chlorures, et le monomère I(ii)(a) est l'éther de diphényle.

8. Procédé suivant la revendication 1, dans lequel le système de monomères comprend I(i) et I(ii)(b) et le monomère I(i) est du chlorure de téréphtaloyle et le monomère I(ii)(b) est du bisphénoxybenzène.

9. Procédé suivant la revendication 1, dans lequel le système de monomères comprend I(i) et I(ii)(d) et le monomère I(i) est le phosgène, et le monomère I(ii)(d) est la bis(phénoxyphénoxy)benzophénone.

10. Procédé suivant l'une quelconque des revendications 7 à 9, dans lequel la concentration des monomères dans le milieu réactionnel est d'au moins 10 % en poids, de préférence d'au moins 15 % en poids sur la base du poids total du mélange réactionnel.

11. Procédé suivant la revendication 1, dans lequel le système de monomères comprend I(i) et I(ii)(c) et le monomère I(i) est le chlorure de téréphtaloyle et le monomère I(ii)(c) est la bisphénoxybenzophénone.

12. Procédé suivant la revendication 1, dans lequel le système de monomères comprend (II) du chlorure de p-phénoxybenzoyle.

13. Procédé suivant la revendication 1, dans lequel le système de monomères comprend (III) le chlorure de p-phénoxy-p-phénoxybenzoyle.

14. Procédé suivant l'une quelconque des revendications précédentes, dans lequel l'acide de Lewis est choisi dans le groupe comprenant le trichlorure d'aluminium, le trichlorure de bore, le tribromure d'aluminium, le tétrachlorure de titane, le pentachlorure d'antimoine, le chlorure ferrique, le trichlorure de gallium et le pentachlorure de molybdène.

15. Procédé suivant la revendication 7, dans lequel la polymérisation est conduite en présence d'un diluant non protique ayant une constante diélectrique d'au moins 2,5 à 24 ° C, de préférence dans la plage de 4,0 à 25 à 24 ° C.

16. Procédé suivant la revendication 15, dans lequel le diluant est choisi dans le groupe comprenant le chlorure de méthylène, le sulfure de carbone, le o-dichlorobenzène, le 1,2,4-trichlorobenzène, le o-difluorobenzène, le 1,2-dichloréthane, le 1,1,2,2-tétrachloréthane et leurs mélanges.

17. Procédé suivant l'une quelconque des revendications précédentes, dans lequel un agent formant une coiffe est ajouté au milieu réactionnel.

18. Procédé suivant la revendication 17, dans lequel une coiffe nucléophile et une coiffe électrophile sont ajoutées au milieu réactionnel.

19. Procédé suivant la revendication 18, dans lequel la coiffe nucléophile est choisie dans le groupe comprenant le 4-chlorobiphényle, la 4-phénoxybenzophénone, le biphényle, la 4-(4-phénoxyphénoxy)-benzophénone et l'éther de 4-benzènesulfonylphényle et de phényle.

20. Procédé suivant la revendication 18 ou 19, dans lequel la coiffe électrophile est choisie dans le groupe comprenant le chlorure de benzoyle et le chlorure de benzènesulfonyle.

21. Procédé suivant l'une quelconque des revendications précédentes, dans lequel la polymérisation est conduite à une température comprise dans la plage de -30 ° C à +25 ° C.

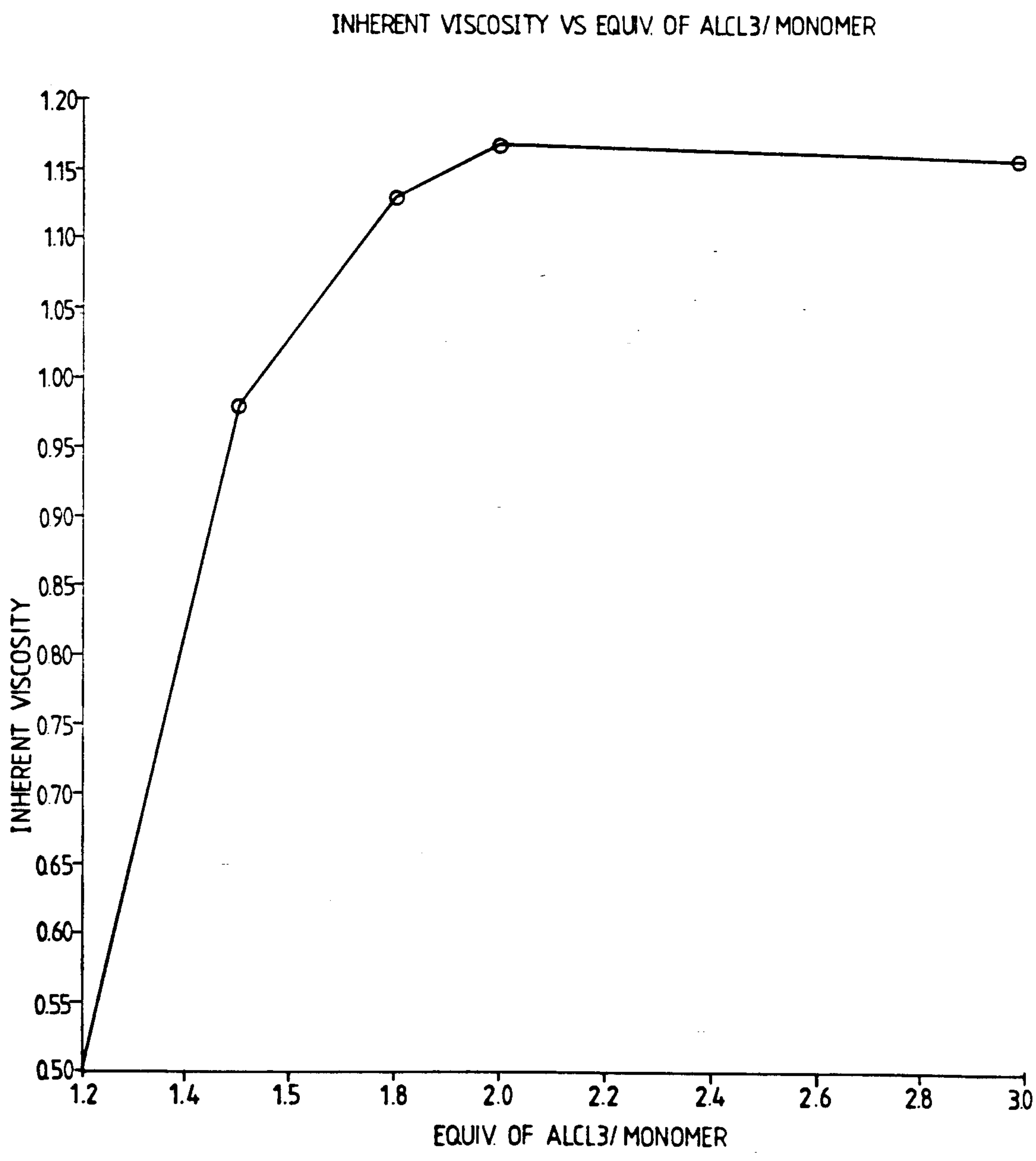
INHERENT VISCOSITY VS EQUIV. OF ALCL3/ MONOMER
INHERENT VISCOSITY
1.20
1.15
1.10
1.05
1.00
0.95
0.90
0.85
0.80
0.75
0.70
0.65
0.60
0.55
0.50
1.2
1.4
1.5
1.8
2.0
2.2
2.4
2.6
2.8
3.0
EQUIV. OF ALCL3/ MONOMER